# EUROPEAN PATENT SPECIFICATION

(11) **EP 2 789 225 B1**
(45) Date of publication and mention of the grant of the patent: **30.08.2017**
(21) Application number: 14163812.2
(22) Date of filing: 08.04.2014
(51) Int. Cl.: A01G 17/00

(54) **Improved method and system for the treatment of fruit plants, in particular vitis vinifera, with a sound diffusion system**
Verbessertes Verfahren und System zur Behandlung von Obstpflanzen, insbesondere von Vitis vinifera mit einem Tondiffusionssystem
Procédé et système améliorés pour le traitement de plantes cultivées, en particulier de vitis vinifera, avec un système de diffusion acoustique

(30) Priority: 12.04.2013 IT SI20130005; 12.04.2013 IT SI20130004 U
(43) Date of publication of application: 15.10.2014
(73) Proprietor: Azienda Agricola il Paradiso di Frassina SRL, 53024 Montalcino - Siena (IT)
(72) Inventor: Cignozzi, Giancarlo, 53024 Montalcino - Siena (IT)
(74) Representative: Martegani, Franco

(56) References cited:
- FLORIANNE KOECHLIN ET AL: "Brunello-Wein mag Mozart", WOZ DIE WOCHENZEITUNG, no. 9, 1 March 2012 (2012-03-01), page 27, XP055112536,

## Description

The present invention relates to an improved method and system for the treatment of the Vitis Vinifera, with the use of a sound diffusion system.

It is known that vegetation is capable of absorbing acoustic energy (Eyring 1946; Martens and Michelsen 1981; Price et al. 1988), to the extent that plants are used for cushioning noise (Hulsman and Attenborough, 1991).

Studies on the effect of physical stimuli on the development of vegetable cells and tissues are extremely important in the field of cell biology research (Braam and Davis, 1960) and sound, together with electromagnetic fields, gravity and mechanical vibrations, can be considered as being a source of stress, as it has been demonstrated that the growth and development of plants respond to the application of sound and electromagnetic fields (Bush, 1995; Roux, 1990).

The influence of music, i.e. a mixed complex of notes, tones, harmonics etc., on the growth of plants has also been the object of numerous scientific debates in recent decades, with results at times conflicting with each other (Weinberger and Burton, 1981).

Studies have so far been limited, however, to surveys of an experimental nature, without further investigating the concrete application of this principle for the agricultural exploitation of an actual plot of cultivated land. It is furthermore generally known to stimulate the development of the Vitis Vinifera by exposing the plants to music ("Brunello-Wein mag Mozart", WOZ Die Wochenzeitung, No. 9, 1.3.2012, p. 27). The main objective of the present invention is therefore to provide a new method for the treatment of the Vitis Vinifera, with the use of a sound diffusion system suitable for significantly and concretely increasing the fertility, growth rate and ripening of the fruit of a plantation, thus allowing it to be exploited on a wide scale.

A further objective of the invention is to provide a method of the above type, which is effective for fighting insects and parasites in general of Vitis Vinifera.

These and other objectives are achieved with the method and system of claims 1 and 2 respectively. Preferred embodiments of the invention are provided in the remaining claims.

Thanks to the method of the invention, the plants of Vitis Vinifera are subjected to sound frequency stress, in order to obtain ameliorating effects of the plants from a physiological and entomological point of view, also reducing the use of pesticides and consequent phytosanitary treatment, in particular with the following advantages:
- a lesser use or no use of pesticides, in addition to a greater defence of the plant from an entomological point of view in relation to the aggression of harmful insects;
- a lesser use of mechanical energy of tractors which leads to:
   - energy saving,
   - lower fuel consumption,
   - lesser soil compaction;
- a lesser use of physical and electric safeguards necessary for distancing or disturbing birds of prey and hoofed mammals;
- considering the diffusion of sound waves on plants of Vitis Vinifera, the following ameliorating results are obtained, from a physiological point of view:
   - an increase in the physiological growth relating to the root system, leaves and fruit as a result of a stimulus to chlorophyll action and photosynthesis,
   - greater efficiency in gaseous exchange which allows a greater resistance and adaptability to environmental stress, such as drought, excessive rain and wind,
   - greater abundance of anthocyanins and polyphenol compounds in the fruit,
   - a rapid growth of the plant and early ripening of the fruit by about two weeks.

These and other objectives, advantages and characteristics appear evident in the following description of some preferred embodiments of the method and system of the invention illustrated, provided as a non-limiting example, in the figures of the enclosed drawings.

In these:
- figure 1 illustrates a plan view of a vineyard of Vitis Vinifera, with a group of rows provided with the system of the invention and with another group of rows without a sound diffusion system;

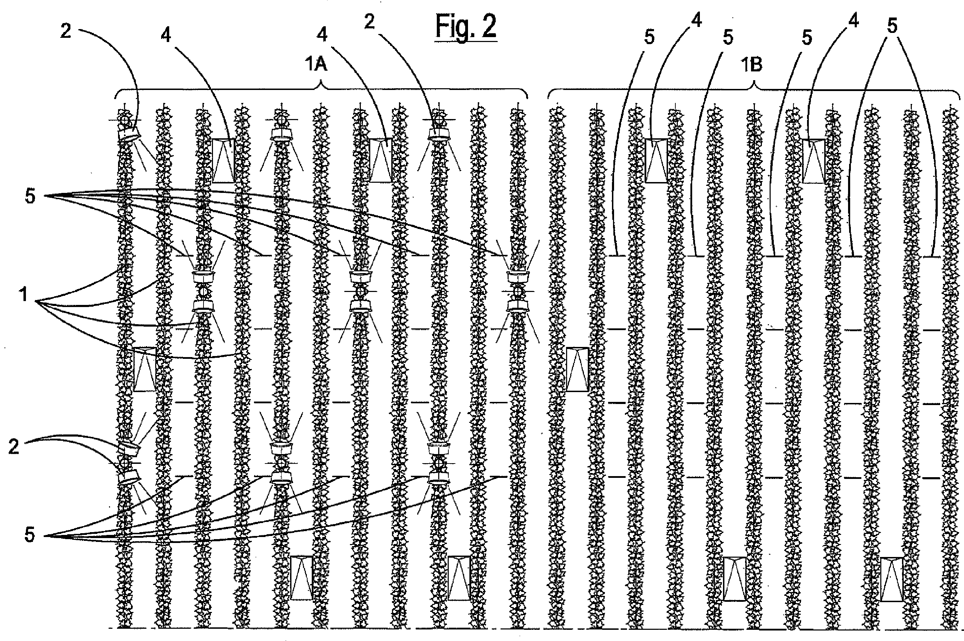

- figure 2 illustrates a plan view of a further example of the vineyard of the invention, also divided into a portion with sound speakers and another without, equipped with traps for capturing insects;

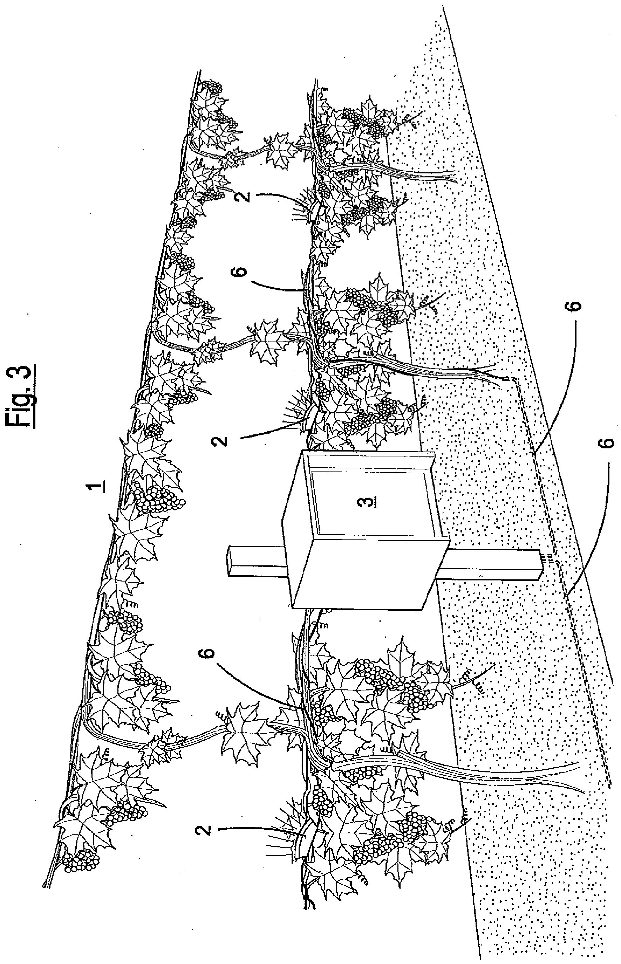

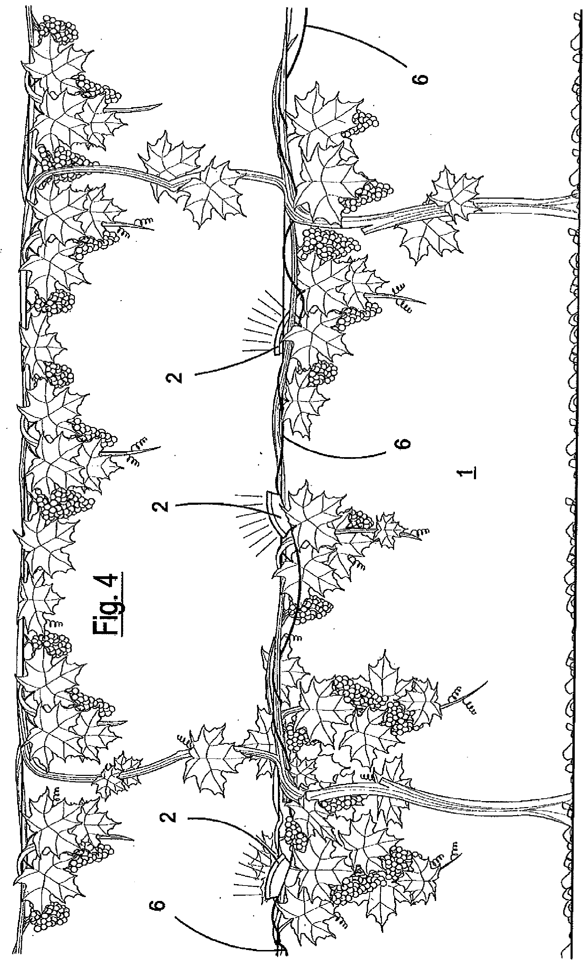

- figures 3 and 4 illustrate the positioning and distribution of the sound speakers inside the plantation treated with the method of the invention.

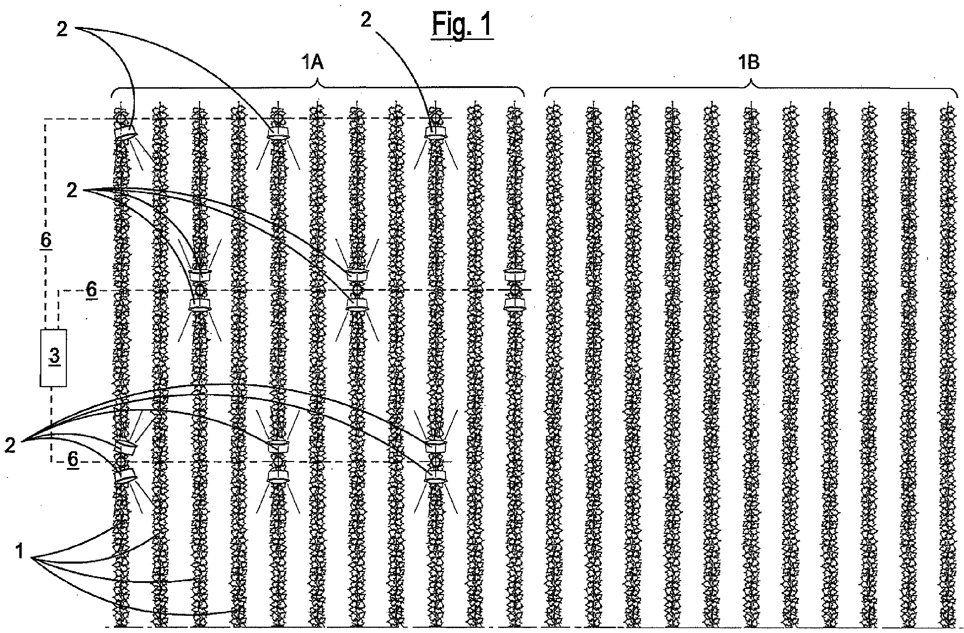

The system illustrated in figure 1 is aimed at creating real acoustic stress consisting of sound waves, preferably in the form of musical harmonies, coming from sound speakers which are focused directly on the plants of Vitis Vinifera, in order to obtain ameliorating effects of a physiological and entomological nature.

In particular, the cultivation illustrated in figure 1 consists of a plurality of rows 1 of Vitis Vinifera, distributed between a portion 1A of land which comprises a plurality of sound speakers 2 distributed inside the same rows, starting from a digital generation and management system 3 of the audio signal transmitted to the speakers 2 by means of a suitable cable 6.

The acoustic stress is applied with the help of speakers positioned at a fixed distance along the rows and at a height of 50-280 cm from the ground, suitably tilted to allow them to follow the natural sloping of the land. In particular, according to the method and system of the invention, said sound waves penetrate both the whole row 1, by positioning speakers 2 at a height of up to 280 cm from the ground, and also the lower part of the trunk of the plant, by simultaneously positioning further speakers 2 at 50 cm from the ground, with a mode and distribution similar to water irrigation.

The arrangement of the speakers 2 was effected so as to enable a sound coverage in the half 1A of the vineyard (thus destining the other half 1B to control), with a frequency response ranging from 90 Hz to 1 kHz with an average pressure of about 85 dB. It was observed that the frequencies of 400 Hz give a marked increase in root growth and that frequencies of 200-300 Hz caused a greater curvature angle and growth of the root in the direction of the sound source.

The wide coverage of the sound speakers 2 distributed inside the portion of vineyard 1A allows a high precision to be obtained on the distances of the speakers, on the frequency of the music diffused and on the sound pressure.

The sound waves are emitted from a digital management system 3 of the audio signal, with a continuous loop advance protocol. These sound waves preferably reproduce a compilation, adequately selected on the basis of the frequencies required for the experimentation, of the Austrian composer and musician Wolfgang Amadeus Mozart.

The experimental verification method of the effects of the system of the invention on the rows of Vitis Vinifera of the vineyard of figure 1 envisages assessments on the growth of the shoots, phonological observations (in conformance with the Eichhorn-Lorenz scale, E-L modified by Coombe, 1995), an analysis of the fertility of the buds and on the gaseous exchanges (net photosynthesis, transpiration, stomatal conductance) by means of a portable instrument (CIRAS-I, PPSystems, Hertfordshire, UK). The periodical collection of grapes exposed and not exposed to sound waves was also effected, in order to observe the sugars, titratable acidity, pH and phenolic ripening. The examination also related to a microbial evaluation of the yeasts and bacteria present on the skins.

In this way, it could be observed that, with respect to the portion of land 1B without sound speakers, but also with respect to a treatment with speakers localized in a few points outside the boundary of the cultivation, the rows of the plot 1A showed a higher potential fertility, a greater growth rate of the shoots, in addition to an early and improved ripening of the grapes with respect to the main technological and phenolic parameters.

According to the invention, the sound diffusion on the vines must begin just before the Spring sprouting (end of March-first week of April) and the sound diffusion must continue, with the same intensity, until the end of the harvesting (grape harvest). Furthermore, the density of electric power emitted by the speakers must not be lower than 2 Watt/m² so that the vines can be penetrated by an average sound pressure not lower than 85 decibels and give beneficial results on the vigour of the vine and an increase in the quality of the grapes (more polyphenols). These parameters are important as they have been studied for compensating natural background noise such as wind, and the rustling of leaves, and other atmospherical disturbances such as rain, barking, birdsong, cricket-chirping and the like.

The inventors have also surprisingly discovered an extremely important principle, i.e. that the benefits of sound on the vines are directly proportional to the proximity of the sound speakers to the vines themselves, in particular, with respect to the base of the plants. By positioning the speakers so that the sound vibrations penetrate the lower part of the trunk of the vine, an improved vibratory concentration is in fact obtained on the system of leaves, buds, grape-clusters and above all roots, as a greater resonance is created with the natural vibrations of the plant, pathogen attacks of fungi (peronospora and mildew) and harmful insects (leafhoppers) are more effectively disturbed and finally also because interference noise, as specified above, is avoided.

The studies were also extended to the influence of the sound source of the system of figure 1 on relations between some of the insects present in the vineyard, causing their migration towards other sites. The starting hypothesis was that classical music, as a generator of sound waves that reach the leaf system of the vine, can act as a disturbance element for leafhoppers (of the vine Empoasca Vitis and Zygina Rhamni) and S. Titanus, in the discovery phase of the partner, thus creating the necessary conditions for searching for a site different from the vineyard and more suitable for accomplishing the reproduction activity on the part of these insects.

For this purpose, "malaise" traps 4 were applied in the vineyard 2, also provided with speakers 2 distributed inside the part 1A of the rows 1, for the massive capturing of any insect flying within the ecosystem of the vineyard, and also yellow-coloured chromotropic traps 5, specific for the capturing of leafhoppers.

From an analysis of the two types of traps exposed in the period from April to September, it could be observed that the species diffused in the two plots 1A with sound speakers 2 and 1B without speakers, are more or less the same in qualitative terms. From a quantitative point of view, however, it was observed that the leafhoppers captured in the portion of vineyard 1A were much less numerous (10 times less) than those in the traps positioned inside the vineyard 1B, a result which can be directly attributed to the effect of the sound waves on insects which communicate through vibrations. In this way, it was possible to obtain the important advantage of avoiding resort to the traditional treatment against this type of insect, with a considerable saving in economic terms, and at the same time protecting the ecosystem from chemical pollution.

## Claims

1. A method for the treatment of the Vitis Vinifera, with the use of a sound diffusion system consisting of a plurality of sound speakers (2) arranged inside the vineyard and along the rows (1) of vines, thus generating sound waves which in turn produce acoustic stress for obtaining ameliorating effects of a physiological and entomological nature,
said sound waves being harmonic sound waves with a frequency ranging from 90 Hz to 1 kHz and with an average pressure of about 85 dB, said speakers (2) emitting a density of electric power of at least 2 Watt/m² so as to obtain said average pressure of 85 dB uniformly on the plants penetrated and also to compensate natural background noise, **characterised in that**
the diffusion of sound on the vines being initiated before the Spring sprouting and is continued until the end of the fruit harvesting, the sound waves with a frequency ranging from 200 to 400 Hz being used for favouring root growth with orientation in the direction of the sound source,
said sound waves penetrate both the whole row (1) by positioning the speakers (2) at a height of up to 280 cm from the ground, and also the lower part of the trunk of the plant, by simultaneously positioning further speakers (2) at 50 cm from the ground, with a mode and distribution similar to water irrigation.

2. A system for the treatment of the Vitis Vinifera, comprising a vineyard in which a sound diffusion system is installed, said sound diffusion system consisting of a plurality of sound speakers (2) arranged inside the vineyard and along the rows (1) of vines, thus generating sound waves which in turn produce acoustic stress for obtaining ameliorating effects of a physiological and entomological nature,
said sound diffusion system being capable of emitting harmonic sound waves with a frequency ranging from 90 Hz to 1 kHz and a frequency ranging from 200 to 400 Hz to favour root growth with orientation in the direction of the sound source,
said sound speakers (2) emitting a density of electric power of at least 2 Watt/m² so as to obtain an average pressure of 85 dB uniformly on the plants (1) penetrated and also to compensate natural background noise, **characterized in that** said speakers (2) are positioned at a height of up to 280 cm from the ground, such that said sound waves penetrate the whole row (1), and at a height of 50 cm from the ground, such that said waves penetrate the lower part of the trunk of the plant, with a mode and distribution similar to water irrigation.

## Patentansprüche

1. Eine Methode zur Behandlung der Weinrebe (vitis vinifera) bei Verwendung eines Klangdiffusionssystems, welches aus einer Vielzahl von Lautsprechern (2) besteht, die im Weingut und jeweils an den Reihen (1) von Weinstöcken entlang angeordnet sind, wobei auf diese Weise entsprechende Klangwellen erzeugt werden, die wiederum eine akustische Belastung erzeugen, um eine optimierende Wirkung physiologischer und entomologischer Art zu erzielen, wobei es sich bei den genannten Klangwellen um harmonische Klangwellen mit einer Frequenz handelt, welche von 90 Hz bis 1 kHz reicht, und mit einem durchschnittlichen Druck von etwa 85 dB, und die genannten Lautsprecher (2) eine Dichte elektrischer Energie von mindestens 2 Watt/m² aussenden, so dass erzielt wird, dass der genannte durchschnittliche Druck von 85 dB die Pflanzen gleichmäßig durchdringt, und ebenfalls, um natürliche Hintergrundgeräusche auszugleichen, **dadurch gekennzeichnet, dass** die Klangdiffusion bei den Weinstöcken vor dem Frühjahrsauskeimen begonnen und bis zum Ende der Fruchternte fortgesetzt wird, wobei die Klangwellen jeweils mit einer Frequenz, die von 200 bis 400 Hz reicht, angewendet werden, um das Wurzelwachstum in Richtung der Klangquelle zu fördern, wobei die genannten Klangwellen sowohl die gesamte Reihe (1) durchdringen, indem die Lautsprecher (2) jeweils in einer Höhe von bis zu 280 cm vom Boden angeordnet werden, wie auch den unteren Bereich des Stamms der Pflanze, indem gleichzeitig weitere Lautsprecher (2) in 50 cm Höhe vom Boden angeordnet werden, und zwar in einer Weise und Verteilung, die der von Bewässerungssystemen ähnelt.

2. Ein System zur Behandlung der Weinrebe (vitis vinifera), welche ein Weingut umfasst, in dem ein Klangdiffusionssystem installiert ist, wobei das genannte Klangdiffusionssystem jeweils aus einer Vielzahl von Lautsprechern (2) besteht, die in dem Weingut und an den Reihen (1) von Weinstöcken entlang angeordnet sind, wodurch entsprechende Klangwellen erzeugt werden, welche wiederum eine akustische Belastung erzeugen, um eine optimierende Wirkung physiologischer und entomologischer Art zu erzielen, wobei das genannte Klangdiffusionssystem in der Lage ist, harmonische Klangwellen mit einer Frequenz zu erzeugen, welche von 90 Hz bis 1kHz reicht und welche von 200 bis 400 Hz reicht, um das Wurzelwachstum in Richtung der Klangquelle zu fördern, und wobei die Lautsprecher (2) eine Dichte elektrischer Energie von mindestens 2 Watt/m² aussenden, so dass erzielt wird, dass ein durchschnittlicher Druck von 85 dB die Pflanzen gleichmäßig durchdringt, und ebenfalls, um natürliche Hintergrundgeräusche auszugleichen, **dadurch gekennzeichnet, dass** die genannten Lautsprecher (2) jeweils in einer Höhe von 280 cm vom Boden angeordnet werden, so dass die genannten Klangwellen die gesamte Reihe (1) durchdringen, sowie in einer Höhe von 50 cm vom Boden, so dass die genannten Wellen den unteren Bereich des Stamms der Pflanze durchdringen, und zwar in einer Weise und Verteilung, die der von Bewässerungssystemen ähnelt.

## Revendications

1. Procédé pour le traitement de la Vitis Vinefera, avec l'utilisation d'un système de diffusion sonore comprenant une pluralité de haut-parleurs (2) agencés à l'intérieur du vignoble et le long des rangs (1) de vignes, en générant ainsi des ondes sonores qui produisent à leur tour une contrainte acoustique pour obtenir des effets améliorants de nature physiologique et entomologique,
lesdites ondes sonores étant des ondes sonores harmoniques avec une fréquence dans la plage de 90 Hz à 1 kHz et avec une pression moyenne de 85 dB, lesdits haut-parleurs (2) émettant une densité de puissance électrique d'au moins 2 Watt/m² de manière à obtenir ladite pression moyenne d'environ 85 dB uniformément sur les plantes pénétrées et également pour compenser un bruit de fond naturel, **caractérisé en ce que** la diffusion de son sur les vignes est commencée avant la germination au printemps et est poursuivie jusqu'à la fin de la récolte des fruits, les ondes sonores avec une fréquence dans la plage de 200 à 400 Hz étant utilisées pour favoriser une croissance des racines avec une orientation dans la direction de la source sonore,
lesdites ondes sonores pénètrent à la fois tout le rang (1) en positionnant les haut-parleurs (2) à une hauteur allant jusqu'à 280 cm du sol et également la partie inférieure du tronc de la plante en positionnant simultanément d'autres haut-parleurs (2) à 50 cm du sol, avec un mode et une distribution similaires à une irrigation d'eau.

2. Système pour le traitement de la Vitis Vinefera, comprenant un vignoble dans lequel un système de diffusion sonore est installé, ledit système de diffusion sonore comprenant une pluralité de haut-parleurs (2) agencés à l'intérieur du vignoble et le long des rangs (1) de vignes, en générant ainsi des ondes sonores qui produisent à leur tour une contrainte acoustique pour obtenir des effets améliorants de nature physiologique et entomologique,
ledit système de diffusion sonore étant capable d'émettre des ondes sonores harmoniques avec une fréquence dans la plage de 90 Hz à 1 kHz et une fréquence dans la plage de 200 à 400 Hz pour favoriser une croissance des racines avec une orientation dans la direction de la source sonore,
lesdits haut-parleurs (2) émettant une densité de puissance électrique d'au moins 2 Watt/m² de manière à obtenir une pression moyenne de 85 dB uniformément sur les plantes (1) pénétrées et également pour compenser un bruit de fond naturel, **caractérisé en ce que** lesdits haut-parleurs (2) sont positionnés à une hauteur allant jusqu'à 280 cm du sol, de manière que lesdites ondes pénètrent tout le rang (1), et à une hauteur de 50 cm du sol, de manière que lesdites ondes sonores pénètrent la partie inférieure du tronc de la plante, avec un mode et une distribution similaires à une irrigation d'eau.
